# EUROPEAN PATENT APPLICATION

(11) **EP 0 824 131 A1**
(43) Date of publication of application: **18.02.1998**
(21) Application number: 97113560.3
(22) Date of filing: 06.08.1997
(51) Int. Cl.: C08K 9/06, C08K 3/36, C08L 21/00, B60C 1/00

(54) **Silica-filled rubber compositions and the processing thereof**

(30) Priority: 15.08.1996 US 698410
(71) Applicant: THE GOODYEAR TIRE & RUBBER COMPANY, Akron, Ohio 44316-0001 (US)
(72) Inventor: Jalics, Georg, Akron, Ohio 44333 (US); Halasa, Adel Farhan, Bath, Ohio 44333 (US); Zanzig, David John, Uniontown, Ohio 44685 (US)
(74) Representative: Leitz, Paul

(57) **Abstract**

The present invention relates to silica-filled rubber compositions and their method of processing. The rubber compositions contain
10 to 150 phr of a particulate precipitated silica having dispersed thereon a trialkoxysilane of the formula:

   R¹Si(OR²)₃

   where
   R¹ is independently selected from the group consisting of alkyl radicals having from 1 to 20 carbon atoms and aryl radicals having from 6 to 24 carbon atoms;
   R² is an alkyl radical having from 1 to 8 carbon atoms; and
      wherein said trialkoxysilane is present on said silica at a level ranging from 1 to 20 percent by weight based upon the weight of the silica.

## Description

### Background of the Invention

U.S. Patent Nos. 3,842,111, 3,873,489 and 3,978,103 disclose the preparation of various sulfur-containing organosilicon compounds.

Sulfur-containing organosilicon compounds are useful as reactive coupling agents between rubber and silica fillers providing for improved physical properties. They are also useful as adhesion primers for glass, metals and other substrates.

U.S. Patent 4,644,077 relates to a process for producing organophilic silica. The process involves admixing water and a catalytic amount of acid with a silica organosol, gradually adding a trialkoxysilane to the admixture under reactive conditions; and removing substantially all of the water. The treated silica are disclosed for use in inks and coatings.

### Summary of the Invention

The present invention relates to silica-filled rubber compositions which contain a particulate precipitated silica having dispersed thereon a trialkoxysilane. The present invention also relates to an energy efficient method of processing silica-filled rubber compositions.

### Detailed Description of the Invention

There is disclosed a method of processing a silica-filled rubber composition which comprises mixing
(i) 100 parts by weight of at least one sulfur-vulcanizable elastomer selected from conjugated diene homopolymers and copolymers and from copolymers of at least one conjugated diene and aromatic vinyl compound; and
(ii) 10 to 150 phr of a particulate precipitated silica having dispersed thereon a trialkoxysilane of the formula:

   R¹Si(OR²)₃

   where
   R¹ is independently selected from the group consisting of alkyl radicals having from 1 to 20 carbon atoms and aryl radicals having from 6 to 24 carbon atoms;
   R² is an alkyl radical having from 1 to 8 carbon atoms; and
      wherein said trialkoxysilane is present on said silica at a level ranging from 1 to 20 percent by weight based upon the weight of the silica.

There is also disclosed silica-filled rubber composition which comprises a mixture of
(i) 100 parts by weight of at least one sulfur-vulcanizable elastomer selected from conjugated diene homopolymers and copolymers and from copolymers of at least one conjugated diene and aromatic vinyl compound; and
(ii) 10 to 150 phr of a particulate precipitated silica having dispersed thereon a trialkoxysilane of the formula:

   R¹Si(OR²)₃

   where
   R¹ is independently selected from the group consisting of alkyl radicals having from 1 to 20 carbon atoms and aryl radicals having from 6 to 24 carbon atoms;
   R² is an alkyl radical having from 1 to 8 carbon atoms; and
      wherein said trialkoxysilane is present on said silica at a level ranging from 1 to 20 percent by weight based upon the weight of the silica.

There is also disclosed a method of reducing the energy required in mixing a silica-filled rubber composition which comprises mixing
(i) 100 parts by weight of at least one sulfur-vulcanizable elastomer selected from conjugated diene homopolymers and copolymers and from copolymers of at least one conjugated diene and aromatic vinyl compound; and
(ii) 10 to 150 phr of a particulate precipitated silica having dispersed thereon a trialkoxysilane of the formula:

   R¹Si(OR²)₃

   where
   R¹ is independently selected from the group consisting of alkyl radicals having from 1 to 20 carbon atoms and aryl radicals having from 6 to 24 carbon atoms;
   R² is an alkyl radical having from 1 to 8 carbon atoms; and
      wherein said trialkoxysilane is present on said silica at a level ranging from 1 to 20 percent by weight based upon the weight of the silica.

The present invention may be used to process sulfur-vulcanizable rubbers or elastomers containing olefinic unsaturation. The phrase "rubber or elastomer containing olefinic unsaturation" is intended to include both natural rubber and its various raw and reclaim forms as well as various synthetic rubbers. In the description of this invention, the terms "rubber" and " elastomer" may be used interchangeably, unless otherwise prescribed. The terms "rubber composition", "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. The preferred rubber or elastomers are polybutadiene and SBR.

In one aspect, the rubber composition is comprised of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of about 20 to about 28 percent bound styrene or, for some applications, an E-SBR having a medium to relatively high bound styrene content, namely, a bound styrene content of about 30 to about 55 percent.

The relatively high styrene content of about 30 to about 55 for the E-SBR can be considered beneficial for a purpose of enhancing traction, or skid resistance, of the tire tread. The presence of the E-SBR itself is considered beneficial for a purpose of enhancing processability of the uncured elastomer composition mixture, especially in comparison to a utilization of a solution polymerization prepared SBR (S-SBR).

By emulsion polymerization prepared E-SBR, it is meant that styrene and 1,3-butadiene are copolymerized as an aqueous emulsion. Such are well known to those skilled in such art. The bound styrene content can vary, for example, from about 5 to about 50 percent. In one aspect, the E-SBR may also contain acrylonitrile to form a terpolymer rubber, as E-SBAR, in amounts, for example, of about 2 to about 30 weight percent bound acrylonitrile in the terpolymer.

Emulsion polymerization prepared styrene/butadiene/acrylonitrile copolymer rubbers containing about 2 to about 40 weight percent bound acrylonitrile in the copolymer are also contemplated as diene based rubbers for use in this invention.

The solution polymerization prepared SBR (S-SBR) typically has a bound styrene content in a range of about 5 to about 50, preferably about 9 to about 36, percent. The S-SBR can be conveniently prepared, for example, by organo lithium catalyzation in the presence of an organic hydrocarbon solvent.

A purpose of using S-SBR is for improved tire rolling resistance as a result of lower hysteresis when it is used in a tire tread composition.

The 3,4-polyisoprene rubber (3,4-PI) is considered beneficial for a purpose of enhancing the tire's traction when it is used in a tire tread composition. The 3,4-PI and use thereof is more fully described in U.S. Patent No. 5,087,668 which is incorporated herein by reference. The Tg refers to the glass transition temperature which can conveniently be determined by a differential scanning calorimeter at a heating rate of 10°C per minute.

The cis 1,4-polybutadiene rubber (BR) is considered to be beneficial for a purpose of enhancing the tire tread's wear, or treadwear. Such BR can be prepared, for example, by organic solution polymerization of 1,3-butadiene. The BR may be conveniently characterized, for example, by having at least a 90 percent cis 1,4-content.

The cis 1,4-polyisoprene and cis 1,4-polyisoprene natural rubber are well known to those having skill in the rubber art.

The term "phr" as used herein, and according to conventional practice, refers to "parts by weight of a respective material per 100 parts by weight of rubber, or elastomer."

The rubber composition should contain a sufficient amount of pretreated silica (a term used herein interchangeably to describe a particulate precipitated silica having dispersed thereon from 1 to 20 percent by weight, based upon the weight of the silica, of the alkoxysilane described herein), and nonpretreated silica, if used, to contribute a reasonably high modulus and high resistance to tear. The pretreated silica filler may be added in amounts ranging from 10 to 250 phr. Preferably, the pretreated silica is present in an amount ranging from 15 to 80 phr. If nonpretreated is also present, the amount of nonpretreated silica, if used, may vary. Generally speaking, the amount of nonpretreated silica will vary from 0 to 80 phr. Preferably, the amount of nonpretreated silica will range from 0 to 40 phr.

Where the rubber composition contains both pretreated silica and nonpretreated silica, the weight ratio of pretreated silica to nonpretreated silica may vary. For example, the weight ratio may be as low as 1:5 to a pretreated silica to nonpretreated silica weight ratio of 30:1. Preferably, the weight ratio of pretreated silica to nonpretreated ranges from 1:3 to 5:1. The combined weight of the pretreated silica and nonpretreated silica, as herein referenced, may be as low as about 10 phr, but is preferably from about 45 to about 90 phr.

The commonly employed precipitated siliceous pigments used in rubber compounding applications can be used as the pretreated and nonpretreated silica in this invention. The siliceous pigments preferably employed in this invention are obtained by the acidification of a soluble silicate, e.g., sodium silicate.

Such silicas might be characterized, for example, by having a BET surface area, as measured using nitrogen gas, preferably in the range of about 40 to about 600, and more usually in a range of about 50 to about 300 square meters per gram. The BET method of measuring surface area is described in the Journal of the American Chemical Society, Volume 60, page 304 (1930).

The silica may also be typically characterized by having a dibutylphthalate (DBP) absorption value in a range of about 100 to about 400, and more usually about 150 to about 300.

The silica might be expected to have an average ultimate particle size, for example, in the range of 0.01 to 0.05 micron as determined by the electron microscope, although the silica particles may be even smaller, or possibly larger, in size.

Various commercially available silicas may be considered for use in this invention such as, only for example herein, and without limitation, silicas commercially available from PPG Industries under the Hi-Sil trademark with designations 210, 243, etc; silicas available from Rhone-Poulenc, with, for example, designations of Z1165MP and silicas available from Degussa AG with, for example, designations VN2 and VN3, etc.

As mentioned above, prior to mixing with an elastomer, precipitated silica is pretreated or has dispersed thereon a trialkoxysilane of the formula

R¹Si(OR²)₃

where
R¹ is independently selected from the group consisting of alkyl radicals having from 1 to 20 carbon atoms and aryl radicals having from 6 to 24 carbon atoms;
R² is an alkyl radical having from 1 to 8 carbon atoms; and
   wherein said trialkoxysilane is present at a level ranging from 1 to 20 percent by weight based upon the weight of the silica.

With respect to the above formula, preferably R¹ is an alkyl of from four carbon atoms or an aryl radical having six carbon atoms, R² is a hydrogen radical or an aryl radical having six carbon atoms and R³ is an alkyl radical having one carbon atom.

Specific examples of trialkoxysilanes of the above formula include methyltrimethoxysilane, ethyltrimethoxysilane, butyltrimethoxysilane, isobutyltrimethoxysilane, phenyltrimethoxysilane, hexyltrimethoxysilane, octyltrimethoxysilane, methyltriethoxysilane, ethyltriethoxysilane, butyltriethoxysilane, isobutyltriethoxysilane, phenyltriethoxysilane, hexyltriethoxysilane, octyltriethoxysilane and the like.

The pretreatment of the precipitated silica with the trialkoxysilane is generally conducted in the presence of a suitable solvent. The primary criteria is to use a solvent which does not react with the starting materials or end product. Representative organic solvents include chloroform, dichloromethane, carbon tetrachloride, hexane, heptane, cyclohexane, xylene, benzene, toluene, aliphatic and cycloaliphatic alcohols. Preferably, water is avoided to prevent reaction with the siloxy groups of the trialkoxysilane compounds.

The first step in the pretreatment step is to dissolve the trialkoxysilane in the solvent containing the silica. The trialkoxysilane should be added to an amount ranging from about 1 percent to 50 percent by weight based upon the weight of the untreated silica. Preferably, the amount of alkoxysilane is added in an amount ranging from 1 to 25 percent by weight.

The reaction should be conducted at a temperature ranging from about 15 to about 150°C.

The reaction time may vary. Generally, the reaction time ranges from about 2 minutes to 10 hours.

The final step in the pretreatment procedure is to remove the pretreated silica from the solvent. Such a separation step may be accomplished by well-known means such as filtration, drying the silica with heat and vacuum and the like.

Upon the completion of the pretreatment step, there is provided a silica having dispersed thereon the above-identified trialkoxysilanes. The trialkoxysilane is generally present at a level ranging from 1 to 20 percent by weight base upon the weight of the pretreated silica. Preferably, the trialkoxysilane is present at a level ranging from 5 to 15 percent by weight based upon the weight of the pretreated silica.

Whereas the pretreated silica contains an trialkoxysilane moiety, such silica-filled rubber composition may also contain known symmetrical sulfur-containing organosilicon compounds.

Examples of suitable sulfur-containing organosilicon compounds are of the formula:

Z-Alk-Sₙ-Alk-Z (II)

in which Z is selected from the group consisting of 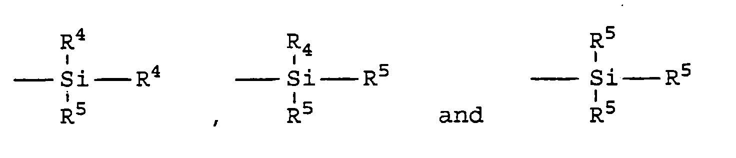 where
R⁴ is an alkyl group of 1 to 4 carbon atoms, cyclohexyl or phenyl;
R⁵ is alkoxy of 1 to 8 carbon atoms, or cycloalkoxy of 5 to 8 carbon atoms;
Alk is a divalent hydrocarbon of 1 to 18 carbon atoms and n is an integer of 2 to 8.

Specific examples of sulfur-containing organosilicon compounds which may be used in accordance with the present invention include: 3,3'-bis(trimethoxysilylpropyl) disulfide, 3,3'-bis(triethoxysilylpropyl) tetrasulfide, 3,3'-bis(triethoxysilylpropyl) octasulfide, 3,3'-bis(trimethoxysilylpropyl) tetrasulfide, 2,2'-bis(triethoxysilylethyl) tetrasulfide, 3,3'-bis(trimethoxysilylpropyl) trisulfide, 3,3'-bis(triethoxysilylpropyl) trisulfide, 3,3'-bis(tributoxysilylpropyl) disulfide, 3,3'-bis(trimethoxysilylpropyl) hexasulfide, 3,3'-bis(trimethoxysilylpropyl) octasulfide, 3,3'-bis(trioctoxysilylpropyl) tetrasulfide, 3,3'-bis(trihexoxysilylpropyl) disulfide, 3,3'-bis(tri-2''-ethylhexoxysilylpropyl) trisulfide, 3,3'-bis(triisooctoxysilylpropyl) tetrasulfide, 3,3'-bis(tri-t-butoxysilylpropyl) disulfide, 2,2'-bis(methoxy diethoxy silyl ethyl) tetrasulfide, 2,2'-bis(tripropoxysilylethyl) pentasulfide, 3,3'-bis(tricyclonexoxysilylpropyl) tetrasulfide, 3,3'-bis(tricyclopentoxysilylpropyl) trisulfide, 2,2'-bis(tri-2''-methylcyclohexoxysilylethyl) tetrasulfide, bis(trimethoxysilylmethyl) tetrasulfide, 3-methoxy ethoxy propoxysilyl 3'-diethoxybutoxy-silylpropyltetrasulfide, 2,2'-bis(dimethyl methoxysilylethyl) disulfide, 2,2'-bis(dimethyl sec.butoxysilylethyl) trisulfide, 3,3'-bis(methyl butylethoxysilylpropyl) tetrasulfide, 3,3'-bis(di t-butylmethoxysilylpropyl) tetrasulfide, 2,2'-bis(phenyl methyl methoxysilylethyl) trisulfide, 3,3'-bis(diphenyl isopropoxysilylpropyl) tetrasulfide, 3,3'-bis(diphenyl cyclohexoxysilylpropyl) disulfide, 3,3'-bis(dimethyl ethylmercaptosilylpropyl) tetrasulfide, 2,2'-bis(methyl dimethoxysilylethyl) trisulfide, 2,2'-bis(methyl ethoxypropoxysilylethyl) tetrasulfide, 3,3'-bis(diethyl methoxysilylpropyl) tetrasulfide, 3,3'-bis(ethyl di-sec. butoxysilylpropyl) disulfide, 3,3'-bis(propyl diethoxysilylpropyl) disulfide, 3,3'-bis(butyl dimethoxysilylpropyl) trisulfide, 3,3'-bis(phenyl dimethoxysilylpropyl) tetrasulfide, 3-phenyl ethoxybutoxysilyl 3'-trimethoxysilylpropyl tetrasulfide, 4,4'-bis(trimethoxysilylbutyl) tetrasulfide, 6,6'-bis(triethoxysilylhexyl) tetrasulfide, 12,12'-bis(triisopropoxysilyl dodecyl) disulfide, 18,18'-bis(trimethoxysilyloctadecyl) tetrasulfide, 18,18'-bis(tripropoxysilyloctadecenyl) tetrasulfide, 4,4'-bis(trimethoxysilyl-buten-2-yl) tetrasulfide, 4,4'-bis(trimethoxysilylcyclohexylene) tetrasulfide, 5,5'-bis(dimethoxymethylsilylpentyl) trisulfide, 3,3'-bis(trimethoxysilyl-2-methylpropyl) tetrasulfide, 3,3'-bis(dimethoxyphenylsilyl-2-methylpropyl) disulfide.

The preferred sulfur-containing organosilicon compounds are the 3,3'-bis(trimethoxy or triethoxy silylpropyl) sulfides. The most preferred compound is 3,3'-bis(triethoxysilylpropyl) tetrasulfide. Therefore as to formula II, preferably Z is 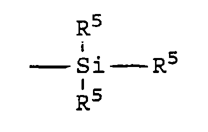 where R⁵ is an alkoxy of 2 to 4 carbon atoms, with 2 carbon atoms being particularly preferred; Alk is a divalent hydrocarbon of 2 to 4 carbon atoms with 3 carbon atoms being particularly preferred; and n is an integer of from 3 to 5 with 4 being particularly preferred.

The amount of the sulfur-containing organosilicon compound of formula II in a rubber composition will vary depending on the level of silica that is used. Generally speaking, the amount of the compound of formula II will range from .00 to 1.0 parts by weight per part by weight of the silica. Preferably, the amount will range from .00 to 0.4 parts by weight per part by weight of the silica.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur-vulcanizable and sulfur-vulcanized material (rubbers), the additives mentioned above are selected and commonly used in conventional amounts. Typical amounts of reinforcing type carbon blacks(s), for this invention, if used, are herein set forth. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr, with a range of from 1.5 to 6 phr being preferred. Typical amounts of tackifier resins, if used, comprise about 0.5 to about 10 phr, usually about 1 to about 5 phr. Typical amounts of processing aids comprise about 1 to about 50 phr. Such processing aids can include, for example, aromatic, naphthenic, and/or paraffinic processing oils. Typical amounts of antioxidants comprise about 1 to about 5 phr. Representative antioxidants may be, for example, diphenyl-p-phenylenediamine and others, such as, for example, those disclosed in the Vanderbilt Rubber Handbook (1978), pages 344-346. Typical amounts of antiozonants comprise about 1 to 5 phr. Typical amounts of fatty acids, if used, which can include stearic acid comprise about 0.5 to about 5 phr. Typical amounts of zinc oxide comprise about 2 to about 5 phr. Typical amounts of waxes comprise about 1 to about 5 phr. Often microcrystalline waxes are used. Typical amounts of peptizers comprise about 0.1 to about 1 phr. Typical peptizers may be, for example, pentachlorothiophenol and dibenzamidodiphenyl disulfide.

In one aspect of the present invention, the sulfur-vulcanizable rubber composition is then sulfur-cured or vulcanized.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from about 0.5 to about 4, preferably about 0.8 to about 2.5, phr. In another embodiment, combinations of a primary and a secondary accelerator might be used, with the secondary accelerator being used in amounts ranging from about 0.05 to about 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can be accomplished by methods known to those having skill in the rubber mixing art. For example the ingredients are typically mixed in at least two stages, namely at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber, pretreated silica and carbon black, if used, are mixed in one or more non-productive mix stages. The terms "non-productive" and "productive" mix stages are well known to those having skill in the rubber mixing art. The sulfur-vulcanizable rubber composition containing the vulcanizable rubber and generally at least part of the pretreated silica should, as well as any optionable the sulfur-containing organosilicon compound, if used, be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

Vulcanization of the rubber composition of the present invention is generally carried out at conventional temperatures ranging from about 100°C to 200°C. Preferably, the vulcanization is conducted at temperatures ranging from about 110°C to 180°C. Any of the usual vulcanization processes may be used such as heating in a press or mold, heating with superheated steam or hot air or in a salt bath.

Upon vulcanization of the sulfur-vulcanized composition, the rubber composition of this invention can be used for various purposes. For example, the sulfur-vulcanized rubber composition may be in the form of a tire, belt or hose. In case of a tire, it can be used for various tire components. Such tires can be built, shaped, molded and cured by various methods which are known and will be readily apparent to those having skill in such art. Preferably, the rubber composition is used in the tread of a tire. As can be appreciated, the tire may be a passenger tire, aircraft tire, truck tire and the like. Preferably, the tire is a passenger tire. The tire may also be a radial or bias, with a radial tire being preferred.

While certain representative embodiments and details have been shown for the purpose of illustrating the invention, it will be apparent to those skilled in this art that various changes and modifications may be made therein without departing from the spirit or scope of the invention.

### Example 1

### Preparation of Treated Silica

Five hundred grams of Zeosil-1165MP silica was added to 1,500 ml pentane and 50 grams of a trialkoxysilane with vigorous mixing to obtain a uniform slurry. Sample 1 used isobutyltrimethoxysilane (IBTMS). Sample 2 used phenyltrimethoxysilane (PTMS). Sample 3 used octyltrimethoxysilane (OTMS). Then, the excess pentane was removed in a stream of nitrogen and heated in an oven overnight at 60°C.

It was calculated that the silicas contained 10 percent by weight of the trialkoxysilane based upon the weight of the silica.

### Example 2

Table I below shows the basic rubber compound that was used in this example. Rubber stocks were prepared in order to compare the effects of using the pretreated particulate precipitated silicas prepared in Example 1 versus a control compound not containing such pretreated silicas.

The compounding procedures involved mixing at 60 RPM the nonproductive ingredients until a rubber temperature of 160°C was achieved, followed by reduction of RPMs to maintain a temperature of 160°C for a period of time. Total mixing times for the nonproductive stages are shown in Table II. All productive stage mixing was for 2 minutes. The physical data for each sample is also in Table II.

**Table I**

| Sample | Ctrl 1 | 2 | 3 | 4 |
|---|---|---|---|---|
| | | | | |

| Nonproductive | | | | |
|---|---|---|---|---|
| Natural Rubber | 10 | 10 | 10 | 10 |
| PBD¹ | 20 | 20 | 20 | 20 |
| IBR² | 45 | 45 | 45 | 45 |
| E-SBR³ | 25 | 25 | 25 | 25 |
| Si69⁴ | 12.8 | 12.8 | 12.8 | 12.8 |
| Aromatic Oil | 11.88 | 11.88 | 11.88 | 11.88 |
| Wax | 1.5 | 1.5 | 1.5 | 1.5 |
| Stearic Acid | 3 | 3 | 3 | 3 |
| Amine Antidegradants | 3 | 3 | 3 | 3 |
| Silica⁵ | 80 | 0 | 0 | 0 |
| IBTMS Silica⁶ | 0 | 88 | 0 | 0 |
| PTMS Silica⁷ | 0 | 0 | 88 | 0 |
| OTMS Silica⁸ | 0 | 0 | 0 | 88 |

| Productive | | | | |
|---|---|---|---|---|
| Cyclobenzylsulfenamide | 1.7 | 1.7 | 1.7 | 1.7 |
| Diphenylguanidine | 2.0 | 2.0 | 2.0 | 2.0 |
| Sulfur | 1.4 | 1.4 | 1.4 | 1.4 |
| Zinc Oxide | 2.5 | 2.5 | 2.5 | 2.5 |

| | | | | |
|---|---|---|---|---|
| ¹Polybutadiene rubber that is commercially available from The Goodyear Tire & Rubber Company has Budene® 1254. Added as 25 phr oil extended rubber (20 phr and 5 phr oil). | | | | |
| ²Solution polymerized isoprene-butadiene rubber having a Tg of -45°C. | | | | |
| ³Emulsion polymerized styrene-butadiene rubber having 40 percent by weight bound styrene. Added as 34.38 phr oil extended rubber (25 phr and 9.38 phr oil). | | | | |
| ⁴A composition of bis-(3-triethoxysilylpropyl) tetrasulfide and N330 carbon black (50/50 weight ratio and, thus, considered as being 50 percent active) commercially available as X50S from Degussa Ag. | | | | |
| ⁵A silica obtained as Zeosil™ 1165MP from the Rhone Poulenc Company and, reportably, having a BET surface area of about 165 and a DBP absorption value of about 260-280. | | | | |
| ⁶As prepared in Example 1. | | | | |
| ⁷As prepared in Example 1. | | | | |
| ⁸As prepared in Example 1. | | | | |

**Table II**

| Sample | Ctrl 1 | 2 | 3 | 4 |
|---|---|---|---|---|
| Silica | 80 | 0 | 0 | 0 |
| IBTMS Silica | 0 | 88 | 0 | 0 |
| PTMS Silica | 0 | 0 | 88 | 0 |
| OTMS Silica | 0 | 0 | 0 | 88 |
| NP Mix Time (min) | 8:10 | 6:27 | 6:14 | 6:42 |
| Power @ drop (kw) | 3.2 | 1.7 | 2.7 | 1.4 |
| Torque @ drop (kgm) | 5.2 | 4.8 | 4.8 | 4.1 |

| Rheometer, 150°C | | | | |
|---|---|---|---|---|
| ML, dNm | 16.0 | 27.0 | 30.0 | 24.5 |
| MH, dNm | 45.0 | 58.8 | 60.0 | 56.1 |
| ts1, min | 4.2 | 2.0 | 3.0 | 2.5 |
| T₂₅, min | 6.5 | 3.2 | 4.3 | 3.6 |
| T₉₀, min | 11.5 | 12.6 | 15.0 | 11.0 |
| dispergrader | 70 | 80 | 80 | 80 |

| Stress Strain - 18'/150°C | | | | |
|---|---|---|---|---|
| 100% Modulus, MPa | 2.18 | 3.82 | 4.14 | 3.41 |
| 200% Modulus, MPa | 5.60 | 10.31 | 11.18 | 9.00 |
| 300% Modulus, MPa | 10.96 | -- | -- | -- |
| M300/M100 | 5.03 | -- | -- | -- |
| Brk Str, MPa | 17.91 | 16.06 | 14.75 | 11.58 |
| EL-Brk (%) | 471 | 304 | 268 | 264 |

| Shore A Hardness | | | | |
|---|---|---|---|---|
| RT | 62 | 71 | 74 | 69 |
| 100°C | 61 | 69 | 70 | 66 |

| Rebound | | | | |
|---|---|---|---|---|
| RT | 43 | 38 | 36 | 45 |
| 100°C | 65 | 67 | 64 | 71 |

| DIN Abrasion (Vol Loss) | | | | |
|---|---|---|---|---|
| cc | 85 | 76 | 73 | 79 |

| E'x10⁻⁸ Dynamic Testing¹ | | | | |
|---|---|---|---|---|
| 0°C | 2.69 | 4.27 | 4.67 | 2.58 |
| 60°C | 1.35 | 1.35 | 1.73 | .95 |

| G' Ratio² | | | | |
|---|---|---|---|---|
| (50%/1%) | 0.366 | 0.462 | 0.422 | 0.541 |

| | | | | |
|---|---|---|---|---|
| ¹Autovibron dynamic mechanical analyzer, 0.5% strain and 11 Hz. | | | | |
| ²Rubber process analyzer at 100°C. | | | | |

Compared to the control compound (Sample 1), all treated silicas, according to the present invention, reduced power consumption during mixing, significantly increased compound moduli and increased hardness and increased low strain dynamic stiffness (E'). Increases in stiffness, translate into improved handling and durability when used in tires. Samples 2 and 4 also showed increased rebound at 100°C which translates into improved rolling resistance in tire treads or other tire components. According to the present invention, all samples showed lower DIN abrasion values which translate into longer-wearing properties.

The G' ratio, G' (50% strain)/G' (1% strain), is a measure of polymer-filler interaction.

All the samples, according to the present invention, show a higher G' ratio indicating improved polymer-filler interaction.

## Claims

1. A method of processing a silica-filled rubber composition which comprises mixing
(i) 100 parts by weight of at least one sulfur-vulcanizable elastomer selected from conjugated diene homopolymers and copolymers and from copolymers of at least one conjugated diene and aromatic vinyl compound; and
(ii) 10 to 150 phr of a particulate precipitated silica having dispersed thereon a trialkoxysilane of the formula:
R¹Si(OR²)₃
where
R¹ is independently selected from the group consisting of alkyl radicals having from 1 to 20 carbon atoms and aryl radicals having from 6 to 24 carbon atoms;
R² is an alkyl radical having from 1 to 8 carbon atoms; and
wherein said trialkoxysilane is present on said silica at a level ranging from 1 to 20 percent by weight based upon the weight of the silica.

2. The method of claim 1 wherein said precipitated silica prior to having the alkoxysilane dispersed thereon has a BET surface area in the range of from 40 to 600 square meters per gram; a dibutyl phthalate (DBP) absorption value in a range of from 100 to about 400; and an average ultimate particle size in the range of from 0.01 to 0.05 micron.

3. The method of claim 1 wherein R¹ is an alkyl radical having four carbon atoms and R² is an alkyl radical having one carbon atom.

4. The method of claim 1 wherein R¹ is an aryl radical having six carbon atoms and R² is an alkyl radical having one carbon atom.

5. A silica-filled rubber composition which is prepared by a process characterized by mixing
(i) 100 parts by weight of at least one sulfur-vulcanizable elastomer selected from conjugated diene homopolymers and copolymers and from copolymers of at least one conjugated diene and aromatic vinyl compound; and
(ii) 10 to 150 phr of a particulate precipitated silica having dispersed thereon a trialkoxysilane of the formula:
R¹Si(OR²)₃
where
R¹ is independently selected from the group consisting of alkyl radicals having from 1 to 20 carbon atoms and aryl radicals having from 6 to 24 carbon atoms;
R² is an alkyl radical having from 1 to 8 carbon atoms; and
wherein said trialkoxysilane is present on said silica at a level ranging from 1 to 20 percent by weight based upon the weight of the silica.

6. The composition of claim 5 characterized in that said precipitated silica prior to having the trialkoxysilane dispersed thereon has a BET surface area in the range of from 40 to 600 square meters per gram; a dibutyl phthalate (DBP) absorption value in a range of from 100 to about 400; and an average ultimate particle size in the range of from 0.01 to 0.05 micron.

7. The composition of claim 5 characterized in that R¹ is an alkyl radical having four carbon atoms and R² is an alkyl radical having one carbon atom.

8. The silica-filled rubber composition of claim 5 characterized by being vulcanized.

9. The silica-filled rubber composition of claim 8 characterized by being in the form of a pneumatic tire, belt or hose.

10. The silica-filled rubber composition of claim 9 characterized by being in the form of a pneumatic tire.
